# EUROPÄISCHE PATENTSCHRIFT

(11) **EP 0 739 582 B1**
(45) Veröffentlichungstag und Bekanntmachung des Hinweises auf die Patenterteilung: **04.10.2000**
(21) Anmeldenummer: 96104779.2
(22) Anmeldetag: 26.03.1996
(51) Int. Cl.: A01D 78/10

(54) **Kreiselheuwerbungsmaschine**
Rotary tedder
Faneuse rotative

(30) Priorität: 26.04.1995 DE 29507032 U
(43) Veröffentlichungstag der Anmeldung: 30.10.1996
(73) Patentinhaber: Fella-Werke GmbH, D-90537 Feucht (DE)
(72) Erfinder: Kohl, Bernhard, 90537 Feucht (DE); Pürrer, Josef, 90537 Feucht (DE)
(74) Vertreter: Matschkur, Lindner Blaumeier Patent- und Rechtsanwälte

(56) Entgegenhaltungen:
- EP-A- 0 097 347
- EP-A- 0 135 180
- EP-A- 0 224 667
- EP-A- 0 291 812
- EP-A- 0 399 914
- DE-A- 2 832 425
- DE-A- 3 034 870
- DE-A- 4 008 648
- US-A- 3 982 773
- US-A- 4 723 787
- SOVIET INVENTIONS ILLUSTRATED Section PQ, Week 8402 22.Februar 1984 Derwent Publications Ltd., London, GB; Class P11, AN 84-009933 XP002010878 & SU-A-1 001 878 (AGRIC MECH RES INST) , 7.März 1983

## Beschreibung

Die Erfindung bezieht sich auf eine Kreiselheuwerbungsmaschine mit an einem im wesentlichen horizontalen Rahmen angeordneten Arbeitskreiseln, wobei an einem starr an einer Deichsel zur Anhängung an eine landwirtschaftliche Zugmaschine befestigten mittleren Rahmenteil links und rechts weitere, zum Transport nach rückwärts einschwenkbare, Rahmenteile arretierbar angelenkt sind.

Nächstliegender Stand der Technik wird in EP-A-0 097 347 gesehen. Der Oberbegriff von Anspruch 1 wird durch die aus EP-A-0 097 347 bekannten Merkmalen gebildet.

Kreiselheuwerbungsmaschinen mit mehr als zwei Arbeitskreiseln bestehen in der Regel aus einem mittleren Rahmenteil mit zwei Arbeitskreiseln, an dem links und rechts weitere Rahmenteile mit Arbeitskreiseln gelenkig angeordnet sind. Um die Gesamtbreite der Maschine für den Transport auf öffentlichen Straßen auf das zulässige Maß verringern zu können, müssen die beweglich am mittleren Rahmenteil angebrachten äußeren Rahmenteile nach oben oder nach rückwärts geschwenkt werden. Bei Maschinen kleinerer bis mittlerer Arbeitsbreiten, die vorwiegend am Dreipunktanbau des Schleppers gefahren werden, bietet sich das Hochschwenken an, da Baugröße und Gewicht dies problemlos ermöglichen.

Die heute von Großbetrieben geforderte maximale Arbeitsleistung erfordert entsprechend große Arbeitsbreiten. In der Regel haben dann die Maschinen sechs und mehr Arbeitskreisel mit entsprechend großen Durchmessern. Das Hochschwenken an sich würde mittels der zur Verfügung stehenden Schlepperhydraulik problemlos möglich sein, aber das vom Schlepper zu tragende Gesamtgewicht der Maschine führt zu einer Entlastung der Schleppervorderachse, wodurch ein sicheres Fahren auf öffentlichen Straßen nicht mehr gewährleistet wird.

Für große Kreiselheuwerbungsmaschinen besteht daher nur die Möglichkeit des Einschwenkens der äußeren Rahmenteile nach rückwärts, wobei die Maschine sowohl in Arbeits- als auch in Transportstellung von den unter jedem Kreisel aneordneten Tasträdern abgestützt wird und wie ein gezogener Anhänger hinter dem Schlepper nachläuft. Das Verschwenken der äußeren Rahmenteile nach rückwärts ist nicht einfach und ohne eine besondere Konstruktion der Anhängevorrichtung kraftaufwendig und umständlich.

Aufgabe der Neuerung ist es, das Zurückschwenken in Transportstellung und das Ausschwenken in Arbeitsstellung so zu gestalten, daß ohne Kraftaufwand der Umstellvorgang vor sich geht. Diese Aufgabe wird der Neuerung entsprechend durch die Merkmale des kennzeichnenden Teils des Anspruchs 1 gelöst.

In Weiterbildung der Erfindung hat es sich dabei als vorteilhaft erwiesen, daß das Schiebestück eine Arretiervorrichtung mit Krallen aufweist, die beim Erreichen einer der beiden Endlagen (Arbeits- bzw. Transportstellung) automatisch eines von zwei beabstandeten Endstücken auf der Deichsel hintergreifen.

Besonders zweckmäßig und einfach gestaltet sich die Ausbildung der Arretiervorrichtung, wenn sie eine Wippe umfaßt, die durch einen federbelasteten Vorwählhebel wahlweise in eine Schwenklage vorspannbar ist.

Es kann auch vorgesehen sein, daß eine Federeinrichtung zur Wirkung kommt, die beim Schwenken in die Transportstellung vorgespannt wird und die dann beim Ausschwenken der Rahmenteile nach vorne in die Arbeitsposition diese Ausschwenkbewegung unterstützt. Anstelle einer Federanordnung kann zur Unterstützung dieser Ausschwenkbewegung auch ein auf das Schiebestück wirkender Hydraulikzylinder vorgesehen sein.

Weitere Vorteile, Merkmale und Einzelheiten der Erfindung ergeben sich aus der nachfolgenden Beschreibung eines Ausführungsbeispiels sowie anhand der Zeichnung. Dabei zeigen:
- Fig. 1: in vereinfachter Darstellung eine Draufsicht auf die Maschine,

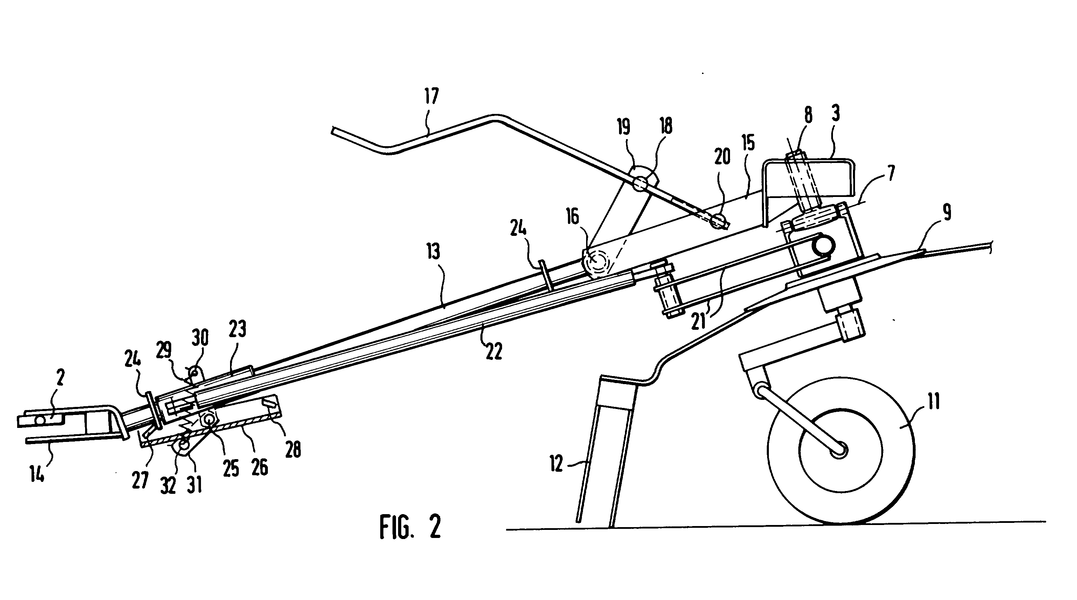

- Fig. 2: eine teilweise geschnittene Seitenansicht der Maschine, und

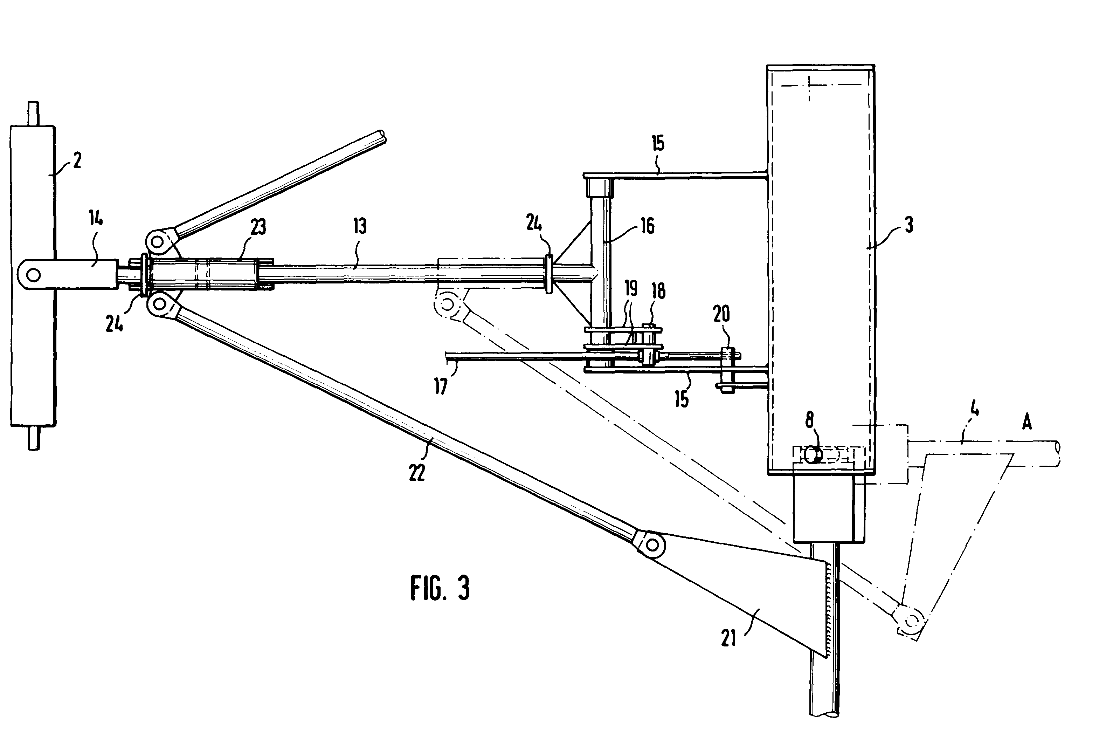

- Fig. 3: eine Teildraufsicht auf die Deichsel und den mittleren Rahmenteil.

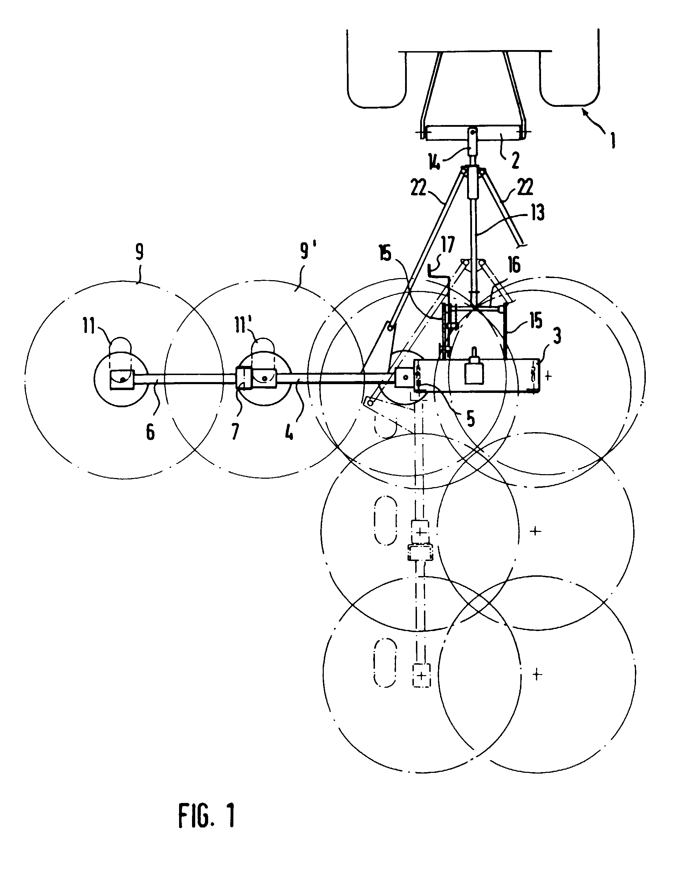

Die Fig. 1 zeigt in Draufsicht eine Heumaschine mit sechs Kreiseln, die von einem Schlepper 1 gezogen wird und an dessen Ackerschiene 2 angehängt ist. Der Rahmen der Heumaschine ist aus einzelnen gelenkig miteinander verbundenen Rahmenteilen zusammengesetzt. An einem mittleren Rahmen 3 sind links und rechts (die rechte Hälfte ist nicht dargestellt) äußere Rahmenteile gelenkig angeordnet. Der innere, äußere Rahmen 4 ist durch eine in Fahrtrichtung liegende, annähernd waagerechte Achse 5 schwenkbar, damit er sich den Bodenunebenheiten anpassen kann. Der äußerste Rahmen 6 ist in der gleichen Weise um die Achse 7 beweglich am Rahmen 4 angelenkt. Damit die äußeren Rahmenteile für den Transport nach rückwärts schwenken können, ist die waagerechte Schwenkachse 5 an einer Achse 8 befestigt, die im mittleren Rahmen 3 drehbar gelagert ist.

An den Rahmenteilen sind in bekannter Weise Arbeitskreisel 9 befestigt, die über das Getriebe 10 und in den Rahmen geführten Wellen sowie Kreuzgelenken und Winkelgetrieben in bekannter Weise angetrieben werden. Das Getriebe 10 ist über eine Gelenkwelle mit dem Antriebssystem des Schleppers verbunden. Während der Arbeit und beim Transport wird die Maschine auf unter den Kreiseln 9 befindlichen Stützräder 11 abgestützt, welche gleichzeitig während der Arbeit die Bodenführung für die an den Kreiseln 9 angebrachten Zinken 12 übernehmen. Um eine störungsfreie Führung der Maschine zu gewährleisten, sind die Stützräder frei durchschwenkbar. Nur die Räder 11' der mittleren Kreisel 9' sind durch eine geeignete Vorrichtung in ihrer Richtung festlegbar und übernehmen die Führung der Maschine während der Arbeit und auch während des Straßentransportes. Um die Maschine an den Schlepper anhängen zu können, ist eine Deichsel 13 vorgesehen, die an ihrem vorderen Ende eine Anhängeöse 14 aufweist. Am mittleren Rahmen 3 sind Platten 15 vorhanden, in denen die Deichsel 13 mit ihrem Querstück 16 drehbar gelagert ist. Zur Festlegung der Deichsel 13 in Bezug zum mittleren Rahmen 3 dient eine Einstellspindel 17. Für diese Funktion ist sie einerseits in einem Drehstück 18, welches in Platten 19, die wiederum fest mit dem Querstück 16 der Deichsel 13 verbunden sind, drehbar gelagert, aber axial festgelegt. Das andere Ende der Einstellspindel 17 ist mit einem Gewinde versehen, welches in eine Gegenmutter 20 eingreift, die in den Platten 15 des mittleren Rahmens 3 schwenkbar gelagert ist.

Für den Transport der Maschine werden die äußeren Rahmenteile 4 und 6 nach rückwärts in die Stellung A geschwenkt. Dabei schwenkt das innere äußere Rahmenteil 4 um die Achse 8. Zur Erzielung einer besseren Bodenfreiheit der Zinken 12 an den Kreiseln 9 ist diese Achse 8 in bekannter Weise vorzugsweise in Fahrtrichtung geneigt angeordnet. In gleicher Weise schwenken die Rahmenteile aus der Transportstellung zurück in die Arbeitsstellung. Um den Schwenkvorgang für die linken und rechten Hälften synchron durchführen zu können, sind an den beiden inneren äußeren Rahmen 4 Konsolen 21 angebracht, an denen Verbindungsstreben 22 beweglich befestigt sind. Auf der Deichsel 13 befindet sich ein Schiebestück 23, an dem das andere Ende der Verbindungsstreben 22 ebenfalls beweglich gelagert ist. Als Anschlag zur Fixierung der jeweiligen Endlage des Schiebestückes 23 sind am vorderen und am rückwärtigen Ende der Deichsel 13 Endstücke 24 angebracht. Zur Festlegung der jeweiligen Endlage befindet sich eine um eine Achse 25 schwenkbare Wippe 26, die mit ihren Krallen 27, 28 in das jeweilige Endstück 24 einrastet. Zum selbsttätigen Einrasten beim Erreichen der Endlage ist für die Wippe eine Feder 29 vorgesehen, die einerseits an einem Punkt 30 am Schiebestück 23 eingehängt ist und mit ihrem anderen Ende an einem Vorwählhebel 31 befestigt ist, der sich frei drehbar an der Achse 25 bewegen kann. Über den Anschlag 32 wird die Wippe 23 vom Vorwählhebel 31 in die jeweils gewünschte Einrastrichtung gedrückt. Durch das selbsttätige Einrasten ist nach dem Rangieren die jeweilige Stellung festgelegt, ohne daß dazu der Schlepperfahrer absteigen muß. Der Antrieb für alle Kreisel erfolgt an den jeweiligen Schwenkstellen über Kreuzgelenke, so daß auch in Transportstellung der Antrieb nicht unterbrochen wird. Während des Umstellvorganges sind die Stützräder 11 frei durchschwenkbar. Dazu wird die Verriegelung der Führungsräder 11' gelöst.

Um auch in schwierigem Gelände den jeweiligen Schwenkvorgang sicher durchführen zu können, hat es sich als vorteilhaft erwiesen, diesen Stützrädern 11' eine Schrägstellung vorzugeben, so daß beim Vorfahren bzw. beim Zurückstoßen des Schleppers das Einschwenken bzw. Ausschwenken unterstützt wird. Eine andere Möglichkeit, die nicht beansprucht wird, das Einschwenken bzw. Ausschwenken zu unterstützen, besteht darin, daß die Stützräder unter den äußeren Kreiseln durch Bremseinrichtungen für den Schwenkvorgang blockiert werden.

## Patentansprüche

1. Heuwerbungsmaschine mit an einem in horizontalen Rahmen angeordneten Arbeitskreiseln, wobei an einem starr an einer Deichsel zur Anhängung an eine landwirtschaftliche Zugmaschine befestigten mittleren Rahmenteil links und rechts weitere, zum Transport nach rückwärts einschwenkbare, Rahmenteile arretierbar angelenkt sind, indem ein Schiebestück auf der Deichsel über Streben mit den zu verschwenkenden Rahmenteilen verbunden ist, so daß beim Verschwenken der Rahmenteile von der Arbeits- in die Transportstellung oder umgekehrt die Verschwenkung der linken und rechten Hälften gemeinsam (synchron) erfolgt, dadurch gekennzeichnet, daß mindestens jeweils eines der Laufräder (11') der linken und rechten Rahmenseite (4) zur Unterstützung des Schwenkvorganges in einer Schrägstellung verriegelbar ist.

2. Heuwerbungsmaschine nach Anspruch 1, dadurch gekennzeichnet, daß das Schiebestück eine Arretiervorrichtung (27, 28) aufweist, die beim Erreichen einer der beiden Endlagen (Arbeits- bzw. Transportstellung) automatisch eines von zwei beabstandeten Endstücken (24) auf der Deichsel (13) hintergreifen.

3. Heuwerbungsmaschine nach Anspruch 2, dadurch gekennzeichnet, daß die Arretiervorrichtung eine Wippe (26) umfaßt, die durch einen federbelasteten Vorwählhebel (31) wahlweise in eine Schwenklage vorspannbar ist.

4. Heuwerbungsmaschine nach einem der Ansprüche 1 bis 3, dadurch gekennzeichnet, daß zur Unterstützung des Umschwenkvorganges von der Transport- in die Arbeitsstellung eine Feder zur Wirkung kommt, die beim Schwenken in die Transportstellung vorgespannt wird.

5. Heuwerbungsmaschine nach einem der Ansprüche 1 bis 4, dadurch gekennzeichnet, daß zur Unterstützung des Schwenkvorganges ein auf das Schiebestück wirkender Hydraulikzylinder vorgesehen ist.

## Claims

1. Hay-making machine with working rotors disposed on a horizontal frame, additional frame parts, which can be pivoted-in towards the rear for transport purposes, being articulated in an arrestable manner on the left and right of a central frame part fastened rigidly to a draw-bar for attachment to an agricultural traction engine, through the fact that a sliding piece on the draw-bar is connected, via struts, to the frame parts to be swivelled, so that swivelling of the left-hand and right-hand halves takes place jointly (synchronously) when the frame parts are swivelled from the working position into the transport position or *vice versa,* characterised in that at least one of the running wheels (11'), in each case, on the left-hand and right-hand side (4) of the frame can be locked in an inclined position in order to aid the pivoting operation.

2. Hay-making machine according to claim 1, characterised in that the sliding piece has an arresting device (27, 28) which automatically engages, when one of the two end locations (working or transport position) is reached, behind one of two end pieces (24) on the draw-bar (13) which are spaced apart from one another.

3. Hay-making machine according to claim 2, characterised in that the arresting device comprises a rocker (26) which can be selectively pre-tensioned into a pivoting location by a spring-loaded preselecting lever (31).

4. Hay-making machine according to one of claims 1 to 3, characterised in that a spring, which is pre-tensioned in the course of pivoting into the transport position, comes into action in order to aid the changing-round operation from the transport position into the working position.

5. Hay-making machine according to one of claims 1 to 4, characterised in that a hydraulic cylinder which acts on the sliding piece is provided in order to aid the pivoting operation.

## Revendications

1. Faneuse comportant des toupies de travail disposées sur un châssis horizontal, et dans laquelle sur une partie de châssis centrale fixée de manière rigide à une barre d'attelage pour l'attelage à un tracteur agricole, sont articulées à gauche et à droite, de manière à pouvoir être bloquées, d'autres parties de châssis pouvant être rabattues par pivotement vers l'arrière pour le transport, grâce au fait qu'un coulisseau sur la barre d'attelage est relié par l'intermédiaire de tirants aux parties de châssis à faire pivoter, de sorte que lors du pivotement des parties de châssis de la position de travail dans la position de transport ou inversement, le pivotement des moitiés de gauche et de droite s'effectuent en commun (de manière synchrone), **caractérisée** en ce que l'une au moins des roues (11') de chacune des parties de châssis (4) de gauche et de droite est verrouillée dans une position oblique pour réaliser une assistance de l'opération de pivotement.

2. Faneuse selon la revendication 1, **caractérisée** en ce que le coulisseau comporte un dispositif de blocage (27, 28), qui lorsque l'une des deux positions extrêmes (position de travail ou position de transport) est atteinte, s'engage automatiquement derrière l'une de deux pièces terminales de butée (24) distantes l'une de l'autre sur la barre d'attelage (13).

3. Faneuse selon la revendication 2, **caractérisée** en ce que le dispositif de blocage comprend un élément basculant (26) qui peut être précontraint sélectivement vers une position de pivotement par un levier de présélection (31) chargé par ressort.

4. Faneuse selon l'une des revendications 1 à 3, **caractérisée** en ce que pour l'assistance de l'opération de pivotement de la position de transport à la position de travail, on fait agir un ressort qui est précontraint lors du pivotement dans la position de transport.

5. Faneuse selon l'une des revendications 1 à 4, **caractérisée** en ce que pour l'assistance de l'opération de pivotement, il est prévu un vérin hydraulique agissant sur le coulisseau.
